# FASCICULE DE BREVET EUROPEEN

(11) **EP 1 093 991 B1**
(45) Date de publication et mention de la délivrance du brevet: **05.11.2003**
(21) Numéro de dépôt: 00420191.9
(22) Date de dépôt: 12.09.2000
(51) Int. Cl.: B62D 3/12

(54) **Agencement de poussoir pour carter de direction à crémaillère**
Druckstück für Zahnstangen- Lenkgetriebegehäuse
Yoke assembly for rack and pinion steering gear

(30) Priorité: 22.10.1999 FR 9913467
(43) Date de publication de la demande: 25.04.2001
(73) Titulaire: Société de Mécanique d'Irigny, 69540 Irigny (FR)
(72) Inventeur: Pantale, M.David, 69126 Brindas (FR)
(74) Mandataire: Bratel, Gérard

(56) Documents cités:
- FR-A- 2 663 284

## Description

La présente invention concerne les directions à crémaillères, pour véhicules automobiles ; elle se rapporte, plus particulièrement, à l'agencement d'un dispositif dit "poussoir", monté dans le carter d'une telle direction, et ayant pour rôle de presser élastiquement la crémaillère contre le pignon, lié à la colonne de direction, avec lequel la crémaillère doit être maintenue en prise avec un effort contrôlé.

Pour obtenir un fonctionnement satisfaisant d'un mécanisme de direction à crémaillère, il est nécessaire de maintenir le pignon et la crémaillère en engrènement. A cet effet, dans la technique actuelle, il est fait appel à une pièce mobile appelée poussoir, combinée avec des moyens élastiques tels que rondelle élastique ou ressort, des exemples étant donnés par le brevet français N° 2.107.780 et par la demande de brevet européen N° 0860345. Ce dispositif permet un mouvement de la crémaillère et un effort de coulissement contrôlé de celle-ci, tout en corrigeant les jeux éventuels.

La demande de brevet français N° 2.663.284 décrit et illustre une réalisation particulière, dans laquelle la pièce poussoir traditionnelle est remplacée par deux doigts élastiques opposés, symétriques l'une de l'autre et moulés d'une seule pièce avec le carter, en matière synthétique. Les deux doigts élastiques, faisant ainsi partie intégrante du carter, viennent en appui sur la crémaillère à l'opposé de sa denture. Un bouchon, vissé sur le carter, comporte des prolongements flexibles dirigés vers l'intérieur du carter, qui en principe appuient élastiquement les doigts précités sur la crémaillère, la force de pression étant réglable par le vissage du bouchon. Une réalisation similaire est décrite dans la demande de brevet européen N° 1063148 au nom du Demandeur, qui fait partie de l'état de la technique selon l'Article 54 (3) CBE.

Dans cette dernière réalisation, les deux doigts possèdent extérieurement une forme conique, de révolution. Il en résulte que, lors du vissage du bouchon, ces doigts se déforment eux-mêmes, dans la zone sollicitée par le bouchon, mais n'assurent pas efficacement leur fonction principale de pression sur la crémaillère.

La présente invention vise à éviter cet inconvénient, en fournissant un dispositif de poussoir perfectionné, procurant une efficacité réelle pour les doigts élastiques en question tout en conservant la possibilité de réglage.

A cet effet, l'invention a pour objet un agencement de poussoir pour carter de direction à crémaillère, visant à maintenir la crémaillère en prise avec le pignon, le dispositif comprenant deux doigts élastiques opposés portés par le carter et venant en appui par leurs faces intérieures sur la crémaillère à l'opposé de sa denture, ainsi qu'au moins un élément à action élastique, réglable en position et venant en appui sur les doigts précités, le dispositif étant caractérisé en ce que les deux doigts élastiques possèdent respectivement, des faces extérieures planes ou sensiblement planes, inclinées en sens opposés l'une de l'autre de manière à présenter en profil une configuration d'ensemble en "V", et en ce que l'élément précité à action élastique est immobile en rotation et possède deux portées d'appui venant en appui sur les faces extérieures inclinées respectives des deux doigts élastiques.

Grâce à cet agencement, il est obtenu que, lors du déplacement de réglage de l'élément à action élastique, les deux doigts élastiques sont resserrés, l'un en direction de l'autre, sans subir aucune déformation parasite, si bien que l'action de ces doigts sur la crémaillère est efficace, et est réellement réglable.

Par ailleurs, l'agencement objet de l'invention reste compatible avec tous moyens, connus ou non, assurant une action élastique réglable sur lesdits doigts élastiques. En particulier, le dispositif de poussoir peut comprendre à ce effet, en combinaison :
- un bouchon vissable sur le carter,
- une rondelle ou pastille liée axialement au bouchon, mais désolidarisée de celui-ci en rotation, la rondelle ou pastille comportant les deux portées d'appui, opposées et symétriques, qui coopèrent respectivement avec les faces extérieures inclinées des deux doigts élastiques, et
- un organe élastique inséré entre le bouchon vissable et ladite rondelle ou pastille.

L'invention sera de toute façon mieux comprise à l'aide de la description qui suit, en référence au dessin schématique annexé représentant, à titre d'exemple, une forme d'exécution de cet agencement de poussoir pour carter de direction à crémaillère :
Figure 1 est une vue en coupe du dispositif objet de l'invention, suivant I-I de figure 2 ;
Figure 2 est une autre vue en coupe de ce dispositif, suivant II-II de figure 1.

Sur le dessin, le repère 2 désigne le carter central tubulaire (représenté partiellement) d'une direction à crémaillère de véhicule automobile. On s'intéresse ici, plus particulièrement, à la partie 2a du carter 2 qui renferme un pignon rotatif 3 en prise avec une crémaillère 4 coulissante (seulement esquissée en traits mixtes), l'arbre du pignon sortant hors de cette partie de carter 2a et étant raccordé à la colonne de direction du véhicule.

Le carter 2 est réalisé en matière synthétique de préférence armée, possédant par elle-même une certaine élasticité, les parties de ce carter 2 qui doivent être rigidifiées comportant, à cet effet, des nervures de raidissement extérieures 2b. Dans la partie 2a de ce carter, le pignon 3 est monté tournant par l'intermédiaire d'un roulement 5 et d'un palier d'extrémité 6. Un joint annulaire 7 assure l'étanchéité autour de l'arbre du pignon 3, à l'endroit où cet arbre sort du carter 2.

Le carter 2 comporte un logement transversal 8, de forme générale cylindrique, qui reçoit la crémaillère 4 en permettant son coulissement longitudinal, la denture de la crémaillère-4 étant en prise avec le pignon 3. Le logement de la crémaillère 4 est délimité par deux doigts élastiques symétriques 9 et 10, de profil intérieur arrondi, qui sont moulés d'une seule pièce avec le carter 2. Les deux doigts 9 et 10 convergent l'un en direction de l'autre, un interstice étant ménagé entre les extrémités libres rapprochées de ces deux doigts 9 et 10. Ces deux doigts élastiques 9 et 10 s'appliquent sur le dos de la crémaillère 4, à l'opposé de la denture de celle-ci.

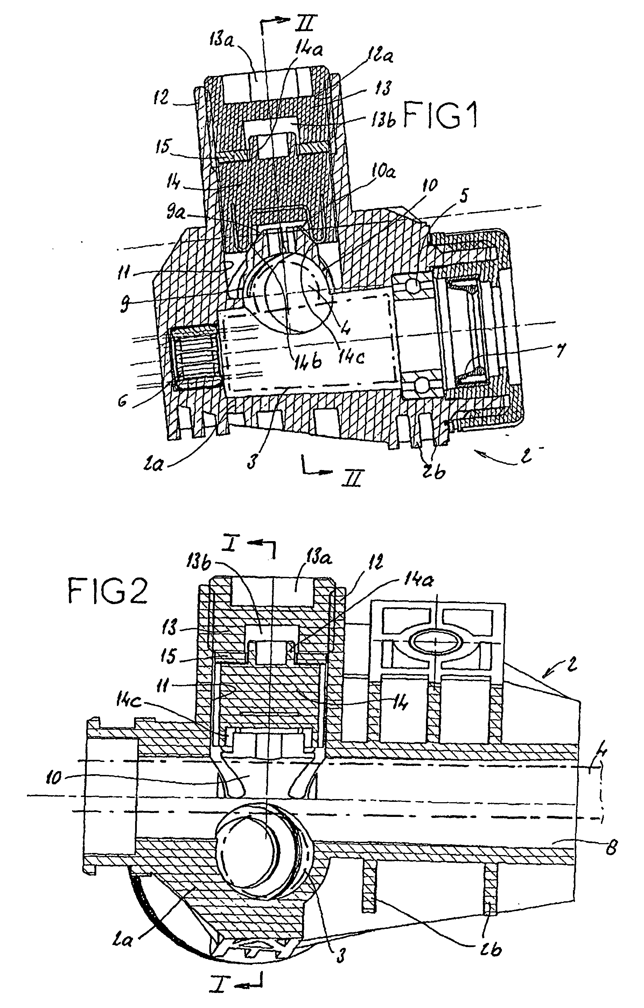

Chacun des deux doigts élastiques 9 et 10 présente, extérieurement, une face plane inclinée, respectivement 9a et 10a. Les deux faces 9a et 10a sont inclinées en sens opposés l'une de l'autre, comme le montre clairement la figure 1, de manière à présenter, en profil, une configuration d'ensemble en "V".

Dans sa zone située autour des doigts élastiques 9 et 10, la partie de carter 2a comporte une ouverture circulaire 11 qui, dans l'exempte particulier et non limitatif ici illustré, est délimitée par une cheminée 12 pourvue d'un filetage intérieur 12a. Ce filetage 12a reçoit un bouchon vissable 13, pourvu d'un filetage extérieur et d'un évidement à six pans creux 13a permettant sa manoeuvre à l'aide d'une clé.

Le bouchon vissable 13 présente, intérieurement, un logement central 13b, recevant la tête centrale 14a d'une rondelle 14 logée dans l'ouverture 11, sous ledit bouchon 13 et coaxialement à ce dernier. Un organe élastique 15, tel qu'une rondelle-ressort, est inséré entre le bouchon 13 et la rondelle 14.

La rondelle 14 est ainsi liée axialement au bouchon vissable 13, tout en pouvant rester immobile en rotation autour de son axe. Sur son côté dirigé vers l'intérieur du carter 2, cette rondelle 14 comporte deux portées opposées symétriques 14b et 14c.

Le bouchon 13 étant supposé suffisamment enfoncé par vissage, ce bouchon 13 appuie élastiquement la rondelle 14, par l'intermédiaire de l'organe élastique 15, sur les deux doigts élastiques 9 et 10. Plus particulièrement, les deux portées 14b et 14c de la rondelle 14 viennent en appui, respectivement, sur les faces extérieures inclinées 9a et 10a des deux doigts élastiques 9 et 10. Le vissage ou dévissage du bouchon 13 sur le filetage 12a permet de régler sa position axiale et d'appuyer plus ou moins fortement la rondelle 14 sur les doigts 9 et 10. Ainsi, ces doigts 9 et 10 sont eux-mêmes plus ou moins resserrés, donc pressés plus ou moins fortement contre la crémaillère 4, ce qui permet d'ajuster l'effort de résistance au coulissement de la crémaillère 4, tout en absorbant les jeux d'usure et les vibrations.

Le dispositif de poussoir, précédemment décrit, s'applique plus particulièrement à des directions manuelles, mais son domaine d'application peut être élargi aux directions assistées de véhicules automobiles.

L'on ne s'éloignerait pas du cadre de l'invention, telle que définie dans les revendications annexées, par des modifications de forme ou de matière du carter 2, ou par l'utilisation de tout organe élastique agissant sur la rondelle 14, ou par une modification de forme de cette rondelle 14 elle-même, ainsi que du bouchon 13, voire même le remplacement de ce bouchon par un autre moyen de réglage.

## Revendications

1. Agencement de poussoir pour carter (2, 2a) de direction à crémaillère, visant à maintenir la crémaillère (4) en prise avec le pignon (3), le dispositif comprenant deux doigts élastiques opposés (9,10) portés par le carter (2, 2a) et venant en appui par leurs faces intérieures sur la crémaillère (4) à l'opposé de sa denture, ainsi qu'au moins un élément (14) à action élastique, réglable en position et venant en appui sur les doigts (9, 10) précités, **caractérisé en ce que** les deux doigts élastiques (9, 10) possèdent, respectivement, des faces extérieures (9a, 10a) planes ou sensiblement planes, inclinées en sens opposés l'une de l'autre de manière à présenter en profil une configuration d'ensemble en "V", et **en ce que** l'élément précité (14) à action élastique est immobile en rotation et possède deux portées d'appui (14b, 14c), venant en appui sur les faces extérieures inclinées respectives (9a, 10a) des deux doigts élastiques (9,10).

2. Agencement de poussoir selon la revendication 1, **caractérisé en ce qu'**il comprend :
- un bouchon (13) vissable sur le carter (2, 2a),
- une rondelle ou pastille (14) liée axialement au bouchon (13), mais désolidarisée de celui-ci en rotation, la rondelle ou pastille (14) comportant les deux portées d'appui (14b, 14c), opposées et symétriques, qui coopèrent respectivement avec les faces extérieures inclinées (9a, 10a) des deux doigts élastiques (9, 10), et
- un organe élastique (15) inséré entre le bouchon vissable (13) et ladite rondelle ou pastille (14).

## Patentansprüche

1. Druckanordnung für ein Gehäuse (2, 2a) einer Zahnstangenlenkung zum Aufrechterhalten des Eingriffs der Zahnstange (4) mit dem Ritzel (3), wobei die Vorrichtung zwei einander gegenüberliegende elastische Finger (9, 10), die von dem Gehäuse (2, 2a) getragen sind und sich mit ihren Innenseiten auf der Zahnstange (4) auf der ihrer Verzahnung gegenüberliegenden Seite abstützen, sowie mindestens ein Element (14) mit elastischer Wirkung aufweist, dessen Position einstellbar ist und sich auf den genannten Fingern (9, 10) abstützt,
**dadurch gekennzeichnet,**
**daß** die beiden elastischen Finger (9, 10) jeweils eine ebene bzw. im wesentlichen ebene Außenseite (9a, 10a) aufweisen, die in zueinander entgegengesetzten Richtungen geneigt sind, so daß sie im Profil eine "V"-förmige Gesamtkonfiguration besitzen,
und **daß** das genannte Element (14) mit elastischer Wirkung drehfest ist und zwei Auflageflächen (14b, 14c) aufweist, die jeweils an den genannten Außenseiten (9a, 10a) der beiden elastischen Finger (9, 10) anliegen.

2. Druckanordnung nach Anspruch 1,
**dadurch gekennzeichnet,**
**daß** sie folgendes aufweist:
- einen auf das Gehäuse (2, 2a) aufschraubbaren Stopfen (13),
- eine Zwischenscheibe oder Spannscheibe (14), die in axialer Richtung mit dem Stopfen (13) verbunden, jedoch mit diesem nicht drehfest ist, wobei die Zwischenscheibe oder Spannscheibe (14) die beiden einander gegenüberliegenden und zueinander symmetrischen Auflageflächen (14b, 14c) aufweist, die jeweils mit den geneigten Außenseiten (9a, 10a) der beiden elastischen Finger (9, 10) zusammenwirken, und
- ein elastisches Organ (15), das zwischen dem aufschraubbaren Stopfen (13) und der Zwischenscheibe oder Spannscheibe (14) eingesetzt ist.

## Claims

1. A pusher arrangement for a rack and pinion steering housing (2, 2a), intended to maintain the rack (4) in engagement with the pinion (3), said device comprising two opposing elastic fingers (9, 10) borne by the housing (2, 2a) and bearing with their internal faces against the rack (4) opposite the teeth thereof, as well as at least one elastically acting element (14), the position of which can be adjusted and which bears on the aforementioned fingers (9, 10), **characterised in that** the two elastic fingers (9, 10) possess respective external faces (9a, 10a) which are planar or substantially planar and which are inclined towards each other in opposite directions so as to present an overall V-shaped configuration in profile, and that the aforementioned elastically acting element (14) is immobile in rotation and has two bearing surfaces (14b, 14c) which bear against the respective inclined external faces (9a, 10a) of the two elastic fingers (9, 10).

2. A pusher arrangement according to claim 1, **characterised in that** it comprises:
- a cap (13) which can be screwed on to the housing (2, 2a),
- a washer or pad (14) which is axially linked to the cap (13) but separate therefrom in rotation, the washer or pad (14) comprising two opposing, symmetrical bearing surfaces (14b, 14c) which cooperate respectively with the inclined external faces (9a, 10a) of the two elastic fingers (9, 10), and
- an elastic element (15) inserted between the screw cap (13) and said washer or pad (14).
